(19) Europäisches Patentamt
European Patent Office
Office européen des brevets

(11) EP 1 656 422 B1

(12) **EUROPEAN PATENT SPECIFICATION**

(45) Date of publication and mention of the grant of the patent:
**03.10.2007 Bulletin 2007/40**

(21) Application number: **04766514.6**

(22) Date of filing: **17.08.2004**

(51) Int Cl.:
***C08L 23/16*** *(2006.01)* ***C08L 23/10*** *(2006.01)*

(86) International application number:
**PCT/EP2004/051813**

(87) International publication number:
**WO 2005/019335 (03.03.2005 Gazette 2005/09)**

(54) **THERMOPLASTIC ELASTOMERS WITH IMPROVED PROCESSING AND MECHANICAL PROPERTIES**

THERMOPLASTISCHE ELASTOMERE MIT VERBESSERTEN VERARBEITUNGSEIGENSCHAFTEN UND MECHANISCHEN EIGENSCHAFTEN

ELASTOMERES THERMOPLASTIQUES A PROPRIETES DE TRAITEMENT AMELIOREES ET A PROPRIETES MECANIQUES AMELIOREES

(84) Designated Contracting States:
**AT BE BG CH CY CZ DE DK EE ES FI FR GB GR HU IE IT LI LU MC NL PL PT RO SE SI SK TR**

(30) Priority: **20.08.2003 EP 03102613**

(43) Date of publication of application:
**17.05.2006 Bulletin 2006/20**

(73) Proprietor: **Advanced Elastomer Systems, L.P.
Akron, OH 44311-1065 (US)**

(72) Inventors:
- **OUHADI, Trazollah
B-4020 Liège (BE)**
- **KENENS, Leander Michiel
B-3010 Kessel-Lo (BE)**

(74) Representative: **Weber, Thomas
Patentanwälte von Kreisler-Selting-Werner,
Deichmannhaus am Dom,
Bahnhofsvorplatz 1
50667 Köln (DE)**

(56) References cited:
**DE-A- 2 556 472**
**US-A- 4 311 628**
**US-A1- 2001 018 475**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 656 422 B1

## Description

Field of the Invention

The present invention relates to a thermoplastic elastomer composition (TPE) having improved processing properties such as extrusion property resulting in improved surface aspect and gloss of the final product. Furthermore, the present invention relates to a method of making said thermoplastic elastomer composition by dynamic vulcanization, and to shaped articles of manufacture comprising formed from the thermoplastic elastomer of the invention. Finally, the present invention relates to a method of improving the processing of a thermoplastic blend that has been dynamically vulcanized.

Background of the Invention

The processing of thermoplastic elastomers such as by extrusion, injection-molding, blow-molding, compression-molding, thermo-forming and calendering has been established as the preferred method for the manufacturing of shaped elastomeric articles.
Nevertheless, shaped articles obtained by extrusion of a large number of extrudable thermoplastic elastomers often having reduced surface appearance, such as rococo aspect. Rococo effect or often titled "Sharkskin" is a surface optical defect, visible to the naked eye that leads to surfaces having a marble like appearance. The cause of the effect is not well identified yet but melt fracture during extrusion is often mentioned in the literature such as United States Patent No. 5,552,482; published international patent application WO 97/19130 and published German patent application 20118862. Moreover, die plugging during extrusion often fails to provide shaped articles having the desired surface part aspects, such as good surface appearance and high surface gloss.
Several attempts have been made in the prior art, such as in United States Patent No. 5,552,482; published international patent application WO 97/19130 and published German patent application 20118862 in order to improve the properties of extruded thermoplastic elastomers, in particular with respect to its surface properties and extrusion behavior. Unites States Patent No. 4,480,074 describes a method of improving the making of thermoplastic elastomeric vulcanizates (TPV) by adding a certain amount of uncured rubber to the TPV composition. Nevertheless, the improvement is very limited. Further additives, such as PE wax, amorphous polypropylene wax, fatty amides or fluorinated polymers which are recommended to improve the extrusion quality of polyolefins lead to minor improvements at most.
United States Patent Application 2001018475 relates to a thermoplastic elastomer composition comprising an EPDM rubber, a specified polypropylene resin, a curing agent and a polyether made from ethylene oxide and propylene oxide units and to the use of said compositions in calender-molding applications by solving the problem of winding and adhesion of compounds on the calender rollers.
DE-A-2556472 discloses the use of polyalkylene glycol compounds with a molecular weight between 200 and 2000 as release and lubricant agents without affecting the physical mechanical properties in un-vulcanized or vulcanized EPDM compositions.
It has therefore been an object of the present invention to provide thermoplastic elastomer compositions which obviate the above-mentioned disadvantages and drawbacks, i.e., which do not show the rococo aspect, die plugging or an undesirable low surface gloss.

Summary of the Invention

According to the invention the addition of small amounts of polyalkylene glycol (PAG) to the thermoplastic elastomer composition prior to vulcanization drastically improves the extrusion quality such as the surface aspect and the gloss of the final product.
In a first aspect the present invention relates to a thermoplastic elastomer composition comprising

- an at least partially cured rubber;
- a thermoplastic resin selected from polypropylene homopolymers, polypropylene-ethylene random copolymers and mixtures thereof;
- a polyalkylene glycol having an average molecular weight as determined by other volume measurement from 600 to 20 000 and optionally
- conventional fillers and additives.

In a further embodiment the present invention relates to method of making a thermoplastic elastomer composition comprising the steps of:

- melt-blending
    - a curable rubber;
    - a thermoplastic resin as mentioned above; and
    - a polyalkylene glycol;
- adding a curative or a curative system to the melt in an amount sufficient to at least partially cure, preferably fully cure the rubber, and
- at least partially, preferably fully dynamically vulcanizing (curing) the rubber component of the blend.

According to the method of the invention the curative or curative system is added to the blend comprising the curable rubber, the thermoplastic resin and the polyalkylene glycol. Said pre-blend in which the rubber is still to be cured is also often called "thermoplastic polyolefin" (or "TPO").

In another embodiment the present invention relates to an extruded article comprising the thermoplastic elastomer composition according to the present invention.

In a still further embodiment the present invention pertains to a method of using a polyalkylene glycol as a processability improver in the manufacture of articles of thermoplastic elastomers, such as, for instance, by injection molding, extrusion or calendering.

Further embodiments of the invention become apparent from the description which follows and from the dependent claims.

Detailed Description of the Invention

The thermoplastic elastomer composition according to the present invention has a combination of both thermoplastic and elastic properties (thermoplastic elastomers, TPE). It is generally obtained by blending a thermoplastic polyolefinic resin with a curable rubber in a way such that the elastomer is intimately and uniformly dispersed as a discrete particulate phase within a continuous phase of the thermoplastic. Early work relating to vulcanized compositions is found in U.S. Patent No. 3,037,954 to Gessler which discloses static vulcanization as well as the technique of dynamic vulcanization wherein a vulcanizable elastomer is dispersed into a resinous thermoplastic polymer and the elastomer is cured while continuously mixing and shearing the polymer blend. The resulting composition (thermoplastic elastomer vulcanizate; "TPV") is a microgel dispersion of cured elastomer, such as butyl rubber, chlorinated butyl rubber, polybutadiene, polyisobutene etc. in an uncured matrix of thermoplastic polymer, such as polypropylene.

According to the present invention a polyalkylene glycol is added to the blend of the curable rubber and the thermoplastic polyolefin prior to curing said blend after the addition of a curative or a curing system by dynamic vulcanization.

Accordingly, the thermoplastic elastomer composition may generally be prepared by mixing (melt-blending) the mixture under shear, such as kneading until a homogeneous blend is obtained. The addition of curing agents (also interchangeably referred to as curatives, crosslinking- or vulcanizing agents) to the blend during the mixing under conditions of heat and shear results in a composition of an at least partially, preferably fully cured (also referred to as partially/fully vulcanized or partially/fully crosslinked) rubber dispersed in a thermoplastic matrix.

The term "rubber" as used herein means any natural or synthetic polymer which can be cured so as to exhibit elastomeric properties. For the purpose of this invention the term "elastomer" is used interchangeably with the term "rubber".

The composition of the invention comprises about 10wt.-% to about 90 wt.-%, preferably about 20 wt.-% to about 80 wt.-%, more preferably about 30 wt.-% to about 50 wt.-% of the cured rubber, based upon the total weight of cured rubber and thermoplastic resin.

The composition of the invention comprises about 90 wt.-% to about 10 wt.-%, preferably about 80 wt.-% to about 20 wt.-%, more preferably about 70 wt.-% to about 50 wt.-% of the thermoplastic resin, based upon the total weight of cured rubber and thermoplastic olefinic resin.

The composition of the invention comprises from about 0.05 wt.-% to about 10 wt.-%, preferably about 0.2 to about 4 wt.-%, most preferably about 0.5 wt.-% to about 3 wt.-% of the polyalkylene glycol, based upon the total amount of thermoplastic elastomer composition, having the effect of improving the processability of the composition during, for instance, injection-molding, extrusion and calendaring.

Additionally, about 0 wt.-% to about 70 wt.-%, preferably about 10 wt.-% to about 60 wt.-%, more preferably 20 wt.-% to about 50 wt.-% of additives and fillers, based upon the total weight of the thermoplastic elastomer composition,

can be added.

The term "fully cured" means, with preference in the order given, less than 5 %, 4 %, 3 %, 2 %, 1 % by weight extractable rubber in boiling xylene as described in United States Patent No. 4,311,628. The term "partially cured" denotes an amount of extractables of between about 5 % and 50 % by weight.

United States Patent No. 4,594,390, describes a process for the preparation of thermoplastic elastomers by dynamic vulcanization comprising a blend of thermoplastic resin and cured rubber, wherein the blend is subjected to high shear for a period of time and at a temperature sufficient to complete the cure and to obtain superior mechanical properties. Detailed information concerning the importance of mixing conditions and shear rate in the cure zone in the dynamic vulcanization is provided in the referenced disclosure. For the purpose of carrying out the method of dynamic vulcanization it can be reverted to conventional rubber and plastic compounding equipment. Exemplary of machinery capable of generating the shear and mixing conditions includes extruders with kneaders or mixing elements with one or more mixing tips or flights, extruders with one or more screws, extruders of co or counter rotating type, Buss kneaders, moreover, low shear mixing equipment such as Banbury mixer or Farrell continuous mixer may be used for the preparation of thermoplastic elastomers. Obviously, the dynamic vulcanization process can also be carried out by use of more than one compounder in series.

Generally, in the process of the present invention the methodology as outlined for the dynamic vulcanization according to United States Patent No. 4,594,390, is followed.

"Dynamic vulcanization" means vulcanization or curing of a curable rubber blended with a thermoplastic resin under conditions of shear at temperatures sufficient to plasticize the mixture. The rubber is simultaneously crosslinked and dispersed as micro-sized particles within the thermoplastic resin. Depending on the degree of cure, the rubber to thermoplastic resin ratio, compatibility of rubber and thermoplastic resin, the kneader type and the intensity of mixing (shear rate) other morphologies, such as co-continuous rubber phases in the plastic matrix are possible.

The thermoplastic elastomer composition may further comprise conventional additives that may be added to the elastomer composition after curing or to the thermoplastic resin, to the rubber or to the blend thereof before or during curing. Examples of such additives are antioxidants, processing oils, extender oils, anti-blocking agents, antistatic agents, ultraviolet stabilizers, plasticizers, flame retardants and other processing auxiliaries known in the rubber compounding art.

Fillers and reinforcing substrates which may be used include conventional inorganics such as calcium carbonate, clays, silica, talc, titanium dioxide, carbon black, discontinuous fibers, and the like. Additives, fillers or other compounds, which may interfere with the curing agents should be added after curing reaches the desired level.

Such additives and fillers may be present in the composition in the total amount as specified above, based on the total weight of the final thermoplastic elastomer including the additives/fillers.

The following general procedure was used in the preparation of thermoplastic elastomers (vulcanizates) samples to get a better understanding of the invention.

The cross-linkable rubber, thermoplastic resin, polyalkylene glycol, cure agent, and the cure coagent or catalyst are added to the heated mixer as individual feed streams, tumbled blend or as a master batch. The curing agent can be added to the formulation at a target range of melt temperature, preferably above the plastic melt temperature and below about 290°C for a specified period of time by any suitable technique, for instance as solution in a compatible process oil, as neat solids, as neat melts or as masterbatches, wherein diluted solutions or masterbatches are preferred. In accordance with the present invention the preferred mixing temperature is from about 150°C to about 290°C, more preferably from about 170°C to about 270°C, most preferably from about 200°C to about 250°C. The average mixing time should individually be determined depending on the equipment used for mixing and the constituents to be mixed.

In the dynamic vulcanization process the curing agents can be added by multiple addition; the curing agent and catalyst can be added in various orders.

One or several ingredients can be added to the melt by using a side feeder extruder or a crumb feeder.

Optional additives such as antioxidants, UV stabilizers, acid scavengers and fillers may be added before or after curing as slurry or paste in a compatible rubber process oil. Powdered blends or masterbatches of the components may also be prepared in a wax or a polymeric carrier to facilitate metering and mixing process. The process oil can be added during mastification, before or after curing or as a split before and after curing. The required mixing for discrete rubber phase morphology and properties can be performed by choice of screw design and screw speed. It is convenient to quantify the progress of vulcanization by monitoring the stock melt temperature, mixing energy or mixing torque requirements during mixing. The mixing torque or mixing energy versus. time curve generally goes through a maximum after which the mixing can be continued to obtain a blend having the desired cure state and processability.

In an alternative process more than one compounding machine is used in series with reduced mixing demand and improved capability and flexibility for mixing and for the addition of curing agents and other ingredients.

Rubber

Illustrative, non-limiting examples of curable rubbers suitable for making the thermoplastic elastomers of the

invention include rubbers selected from the group consisting of ethylene/alpha-olefin/non-conjugated diene copolymer rubbers, such as ethylene-propylene/non-conjugated diene rubber (EPDM), ethylene/alpha-olefin copolymer rubber wherein the alpha-olefin is of the formula $CH_2$=CHR and wherein R is a straight or branched alkyl group having 1 to 12 carbon atoms such as propylene, 1-butene, isobutylene, 1-pentene, 1-hexene, 1-heptene, 1-octene, 3-methyl-1-pentene, 4-methyl-1-pentene, 5-methyl-1-hexene, and the like. A preferred ethylene/alpha-olefin rubber is ethylene/propylene copolymer rubber (EPM).

Ethylene/alpha-olefin copolymers of $C_4$ to $C_{12}$ alpha-olefins with or without a non-conjugated diene can be synthesized via traditional Ziegler-Natta catalysis, via the more recent single-site organometallic catalysts in solution or gas phase or via combined Ziegler-Natta/ single-site organometallic catalyst systems.

Additional examples of rubbers are represented by butyl rubber, halogenated butyl rubber, copolymers of $C_4$ to $C_7$ iso-monoolefins and para-alkylstyrene or their halogenated derivatives, natural or synthetic rubbers, polyisoprene rubber, polybutadiene rubber, styrene/butadiene copolymer rubbers, and blends thereof.

The curable or vulcanizable rubbers which can be used in the practice of this invention include both synthetic and natural rubbers under the proviso that at least one of the rubbers utilized must be vulcanizable.

While polyisobutylene (PIB) is not a true rubber because it cannot be vulcanized, it can be utilized in the practice of this invention in combination with a vulcanizable rubber provided that the PIB has a average molecular weight of about 40,000 to about one million.

The term "nitrile rubber" means an acrylonitrile copolymer rubber. Suitable nitrile rubbers comprise rubbery polymers of 1,3-butadiene or isoprene and acrylonitrile. Preferred nitrile rubbers comprise polymers of 1,3-butadiene and about 20 to 50 weight percent acrylonitrile. Any nitrile rubber which is a "solid" rubber having an average molecular weight of at least 50,000, and preferably between about 100,000 to 1,000,000 can be used. Commercially available nitrile rubbers suitable for the practice of the invention are described in Rubber World Blue Book, 1980 Edition, Materials and Compounding Ingredients for Rubber, pages 386 to 406.

Suitable halogenated copolymers of a $C_4$ to $C_7$ iso-monoolefin and a para-alkylstyrene include copolymers comprising para-alkylstyrene moieties which may be represented by the formula:

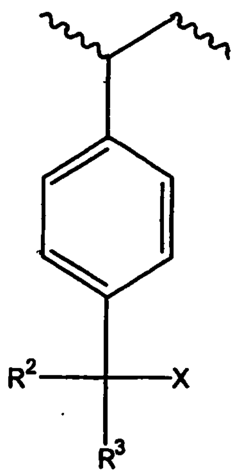

wherein $R^2$ and $R^3$ are independently selected from the group consisting of hydrogen, alkyl groups having about 1 to 5 carbon atoms, primary and secondary haloalkyl groups having about 1 to 5 carbon atoms, and X is selected from the group consisting of bromine, chlorine and mixtures thereof, such as those disclosed in published European Patent application 0355021. Preferably, the alkylstyrene copolymer is a halogenated copolymer of isobutylene and para-methylstyrene, more preferably, the brominated copolymer of isobutylene and para-methylstyrene.

Butyl rubber is a copolymer of an isoolefin and a conjugated multiolefin. The useful rubber copolymers comprise a major portion of isoolefin and a minor amount, preferably not more than about 30 weight percent, of a conjugated multiolefin. The preferred rubber copolymers comprise about 85 to 99.5 weight percent (preferably about 95 to 99.5 weight percent) of a $C_4$ to $C_7$ isoolefin, such as isobutylene, and about 15 to 0.5 weight percent (preferably about 5 to 0.5 wt %) of a multiolefin of about 4 to 14 carbon atoms. These copolymers are referred to in the literature as "butyl rubber."

The term "butyl rubber" as used herein includes the aforementioned copolymers of an isoolefin having 4 to 7 carbon atoms and about 0.5 to 20 weight percent of a conjugated multiolefin of about 4 to 14 carbon atoms. Preferably these copolymers contain about 0.5 to about 5% conjugated multiolefin. The preferred isoolefin is isobutylene. Suitable conjugated multiolefins include isoprene, butadiene, dimethyl butadiene, piperylene, etc. Commercial butyl rubber is a

copolymer of isobutylene and minor amounts of isoprene.

Butyl rubber as above described may be halogenated with from about 0.1 to about 10, preferably, about 0.5 to about 3.0 weight percent chlorine or bromine to make a suitable halobutyl rubber. The chlorinated form of butyl rubber is commonly known as "chlorobutyl rubber" and the brominated form as "bromobutyl rubber."

Another suitable rubber according to the present invention is based on polychlorinated butadienes such as polychloroprene rubber. These rubbers are commercially available under the trade names Neoprene® (DuPont Dow) and Bayprene® (Mobay).

In a preferred embodiment of the invention the curable rubber is represented by an ethylene/alpha-olefin copolymer rubber (EPM) or ethylene/alpha-olefin/non-conjugated diene copolymer rubber (EPDM), the latter being most preferred.

The non-conjugated diene monomer can be a straight chain, a branched chain or cyclic hydrocarbon diene having from about 6 to about 15 carbon atoms. Examples of suitable non-conjugated dienes are straight chain acyclic dienes such as 1,4-hexadiene and 1,6-octadiene; branched chain acyclic dienes such as 5-methyl-1,4-hexadiene, 3,7-dimethyl-1,6-octadiene, 3,7-dimethyl-1,7-octadiene and mixed isomers of dihydromyricene and dihydroocinene; single ring alicyclic dienes such as 1,3-cyclopentadiene, 1,4-cyclohexadiene, 1,5-cyclooctadiene and 1,5-cyclododecadiene; and multi-ring alicyclic fused and bridged ring dienes such as tetrahydroindene, methyl tetrahydroindene, dicyclopentadiene, bicyclo-(2,2,1)-hepta-2,5-diene; alkenyl-, alkylidene-, cycloalkenyl- and cycloalkylidene norbornenes such as 5-methylene-2-norbornene (MNB), 5-propenyl-2-norbornene, 5-isopropylidene-2-norbomene. 5-(4-cyclopentenyl)-2-norbornene, 5-cyclohexylidene-2-norbornene, 5-vinyl-2-norbornene and norbornadiene.

Typical dienes used to prepare EPDMs are selected from 1,4-hexadiene (HD), 5-ethylidene-2-norbornene (ENB), 5-vinyl-2-norbornene (VNB), 5-methylene-2-norbornene (MNB), and dicyclopentadiene (DCPD). Especially preferred dienes are selected from 5-vinyl-2-norbornene (VNB) and 5-ethylidene-2-norbornene (ENB).

The ethylene/alpha-olefin/non-conjugated diene rubber contains from about 40 to about 85 weight percent of ethylene, preferably from about 45 to about 80 weight percent, and more preferably in the range of from about 50 to about 75 weight percent, based on the ethylene/propylene/non-conjugated diene rubber. The ethylene/propylene/non-conjugated diene rubber contains from about 1 to about 11 weight percent of diene, preferably from about 2 to about 8 weight percent and more preferably in the range of from about 3 to about 6 weight percent. The balance of the ethylene, alpha-olefin, non-conjugated diene elastomeric polymer to about 100 percent will generally be made up by an alpha-olefin which is selected from the group consisting of propylene, 1-butene, 1-hexene, 4-methyl-1-pentene, 1-octene, 1-decene and combinations thereof, and the like. The ethylene/propylene/non-conjugated diene rubber which is preferred according to this invention contains propylene as the alpha-olefin and 5-vinyl-2-norbornene as the diene comonomer.

Thermoplastic Resin

Thermoplastic resins (also referred to herein as thermoplastic polyolefinic resins) suitable for the compositions according to the present invention include thermoplastic crystalline polyolefin homopolymers and random copolymers that are desirably prepared from monoolefin monomers having from 2 to 7 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. Particularly preferred are monomers having from 3 to 6 carbon atoms wherein propylene is most preferred. As used in the specification and in the claims the term polypropylene includes

(i) homopolymers of propylene;

(ii) random copolymers of propylene with about 1 to about 30 wt.-%, preferably about 5 to about 20 wt.-%, most preferably about 7 to about 15 wt.-% of ethylene and/or about 1 to about 40 wt.-%, preferably about 5 to about 30 wt.-%, most preferably about 7 to about 20 wt.-%, based on the total weight of the copolymer, of an alpha-olefin comonomer of 4 to 16 carbon atoms, preferably of 5 to 10 carbon atoms, most preferably of 6 to 8 carbon atoms; and

(iii) mixtures thereof.

In one embodiment of the invention propylene random copolymers can be selected fro m terpolymers of propylene/ethylene/alpha-olefin having from 4 to 16 carbon atoms, preferably from 5 to 10 carbon atoms, most preferably from 6 to 8 carbon atoms containing propylene as the major component in an amount of up to about 98 wt-%, preferably up to about 95 wt-%, most preferably up to about 90 wt-%, and ethylene and the $\alpha$-olefin each in an amount of about 1 to 10 wt.-%, preferably about 2 to 8 wt.-%, most preferably about 4 to 6 wt.-% individually, based on the total weight of the copolymer.

In the present invention polypropylene represents the preferred thermoplastic polyolefin. Polypropylene can

have different crystallinic structures such as isotactic or syndiotactic and different degrees of crystallinity including materials with about 0 % of an amorphous structure, such as the "elastic" polypropylenes. The upper limit of amorphous structures present corresponds to that of a classical isotactic polypropylene. The polypropylenes as mentioned above can have a linear or branched structure. Polyolefins which may be further be used as thermoplastic resins in accordance with the present invention are high, low, linear-low and very low density polyethylenes and copolymers of ethylene with (meth)acrylates and/or vinyl acetates. The thermoplastic resins mentioned above can be synthesized via traditional Ziegler-Natta catalysis, via the more recent single-site organometallic catalysts in solution or gas phase, or via combined Ziegler-Natta/single-site organometallic catalyst systems. Commercial available polyolefins may be used in the practice of the invention.

Conventional Fillers and Additives

Adding optional fillers and/or additives is conventional in the art of rubber compounding. Generally, the fillers and additives can be added to the composition before, during or after curing the rubber. Suitable additives are selected from the group consisting of pigments, antistatic agents, antioxidants, ultraviolet light stabilizers, anti-blocking agents, lubricants, processing oils, waxes, coupling agents for fillers and mixtures thereof. The term "filler" as used herein refers to non-reinforcing fillers, reinforcing fillers, organic fillers and inorganic fillers. The fillers may be organic fillers and inorganic fillers (e.g., mineral fillers). Preferably, the filler is an inorganic filler. Suitable fillers include talc, silica, clays, solid flame retardants, calcium carbonate, titanium dioxide, barium sulfate, carbon black, other mineral fillers, and mixtures thereof. The carbon black can be derived from any source and be any type of carbon black such as channel blacks, furnace blacks, thermal blacks, acetylene black, lamp black, and the like. Any effective amount of filler may be added. Typically, the filler may be added in an amount of up to about 70 weight percent, preferably ranging from about 2 to about 50 weight percent based on the total thermoplastic dynamically vulcanized composition. For specific fillers, these proportions may vary. Carbon black, for instance, is preferably added in an amount ranging from about 1 to about 40 weight percent, more preferably from about 2 to 20 weight percent, based on the total thermoplastic dynamically vulcanized composition.

The suitable additives for the practice of the invention may be added in an amount of up to 10 weight percent, generally ranging from about 0.05 to about 5 weight percent, preferably from about 0.05 to about 3 weight percent, based on the total composition. When the suitable additive is an ultraviolet light stabilizer, the ultraviolet light stabilizer may be present in an amount ranging from about 0.05 to about 2.5 weight percent, based on the total thermoplastic elastomer composition.

Rubber process oils have particular ASTM designations depending on whether they fall into the class of paraffinic, naphthenic or aromatic process oils. Typically, they are derived from petroleum fractions.

Other types of process oils, which can be used in accordance with the present invention are represented by alpha olefinic synthetic oils, such as liquid polybutylene supplied by Esso under the trade designation Parapol® and isoparaffinic oil or spectrysyn® from ExxonMobil.

The process oils can be selected from those commonly used in conjunction with rubber components. The ordinarily skilled rubber chemist will recognize which type of process oil should be utilized with a particular rubber. The quantity of rubber process oil utilized is based on the total rubber content, both cured and uncured, and can be defined as the ratio by weight of process oil to the total rubber in the TPE. This ratio may range from about above 0 to about 4.0/1, preferably about 2.0/1 to about 1.5/1; more preferably about 1/1 to about 0.8/1. Larger amounts of process oil can be used, the disadvantage being reduced physical strength of the composition. Oils other than petroleum based oils, such as oils derived from coal tar and pine tar, can also be utilized. In addition to the rubber process oils, organic esters and other synthetic plasticizers may be used.

Antioxidants can be added to the composition of the invention. The particular antioxidant utilized will depend on the rubbers used. Their proper selection is well within the ordinary skill of the rubber processing chemist. Antioxidants will generally fall into the class of chemical protectors or physical protectants.

The chemical protectors are generally classified into the three chemical groups of secondary amines, phenolics, phosphates and sulfur-based protectors. Illustrative, but non-limiting examples of types of antioxidants useful in the practice of this present invention are represented by hindered phenols, amino phenols, hydroquinones, alkyldiamines, amine condensation products, etc. Further, non-limiting examples of these and other types of antioxidants are represented by styrenated phenol, 2,2'-methylene-bis(4-methyl-6-tertbutylphenol), 2,6'-di-tert-butyl-o-di-methylamino-p-cresol, hydroquinone monobenzyl ether, octylated diphenyl amine, phenyl-beta-naphthylamine, N,N'-diphenylethylene diamine, aldol-alpha-naphthylamine, N,N'-diphenyl-p-phenylene diamine, etc.

Physical protectants can be used as well. These are generally represented by waxy materials that impart a "bloom" to the surface of the rubber part and thus form a protective coating to shield the part from oxygen, ozone, etc.

Other families of polymers which optionally can be used as additives in accordance with the present invention are represented by styrenic block copolymers like SBS, SIS and/or their hydrogenated versions like SEBS, SEPS, etc.

In the thermoplastic elastomer composition according to the present invention the rubber component can be fully or partially vulcanized/crosslinked. It is preferred, however, to fully crosslink the rubber component. Those of ordinary skill in the art will appreciate the appropriate quantities, types of cure systems and vulcanization conditions required to accomplish the full or partial vulcanization of the rubber. The rubber can be vulcanized using varying amounts of curative, varying temperatures and varying times of cure in order to obtain the optimum crosslinking required. Any known cure system can be used provided that it is suitable under the vulcanization conditions for the rubber being used and that it is compatible with the thermoplastic polyolefin resin component of the TPV. These curatives include sulfur, sulfur donors, metal oxides, phenolic resin systems, high energy radiation and the like, both with and without accelerators and co-agents. In a further preferred alternative of the present invention crosslinking can also be effected by hydrosilylation crosslinking as disclosed in published European patent application 0776937, the disclosure of which is fully incorporated herein by reference.

Since certain polyalkylene glycols may exhibit a negative impact on phenolic resin curing systems, peroxide- and hydrosilylation curing systems are preferably applied to cure the composition according to the present invention when such as polyalkylene glycol is used.

Organic peroxides in combination with an adequate well-known co-agent can be used as cure system except for instances in which the butyl rubber is a non-halogenated butyl rubber. The role of the co-agent in peroxide cure systems is to enhance the cure-state and inhibiting chain-fragmentation or scission effect. Specific examples of useful organic peroxides are selected from octanoyl peroxide, lauroyl peroxide, benzoyl peroxide, tert-butyl peroctoate, p-chlorobenzoyl peroxide, 2,4-dicholorbenzoyl peroxide, cyclohexanone peroxide, tert-butyl peroxybenzoate, methyl ethyl ketone peroxide, dicumyl peroxide, di-tert-butyl peroxide, 2,5-dimethyl-2,5-di(benzoylperoxy)hexane 2,5-dimethyl-2,5-di(tert.-butytperoxy)hexane, di-tert-butyl diperoxyphthalate, tert.-butylcumyl peroxide, diisopropylbenzene hydroperoxide, 1,3-bis(tert-butylperoxyisopropyl)benzene, tert-butylperoxy-pivalate, 3,5,5-trimethylhexanoyl peroxide, 1,1-bis(tert-butyl-peroxy)-3,5,5-trimethylcyclohexane, 1,1-bis(tert.-butyl-peroxy)cyclohexane, etc.; azo compounds such as azobisisobutyronitrile, and the like.

The peroxide-based cure systems may be used with or without co-agents such as ethylene dimethacrylate, polyalkylene glycol dimethacrylate, trimethylol propane trimethacrylate, divinyl benzene, diallyl itaconate, triallyl cyanurate, diallyl phthalate, allyl methacrylate, cyclohexyl methacrylate, m-phenylene bis maleimide (HVA-2), and the like.

Phenolic resin curatives may be used for the preparation of the thermoplastic elastomer vulcanizate of the invention. Said cure systems are well known in the art and literature of vulcanization of rubbers. Their use in vulcanized compositions is more fully described in U.S. Patent No. 4,311,628.

A basic ingredient of such system is a phenolic curing resin made by condensation of halogen substituted phenol, $C_1$-$C_{10}$ alkyl substituted phenol or unsubstituted phenol with an aldehyde, preferably, formaldehyde, in an alkaline medium or by condensation of bifunctional phenoldialcohols. Dimethylol phenols substituted in the para-position with $C_5$-$C_{10}$ alkyl groups are preferred. Halogenated alkyl substituted phenol curing resins prepared by halogenation of alkyl substituted phenol curing resin are also especially suitable. Phenolic curative systems comprising methylol phenolic resins, halogen donor and metal compound are especially recommended, details of which are described in Giller, U.S. Patent No. 3,287,440 and Gerstin et al, U.S. Patent No. 3,709,840. Non-halogenated phenol curing resins are used in conjunction with halogen donors, preferably, along with a hydrogen halide scavenger. Ordinarily, halogenated, preferably brominated, phenolic resins containing about 2-10 weight percent bromine, do not require halogen donor but are used in conjunction with a hydrogen halide scavenger such as metal oxides such as iron oxide, titanium oxide, magnesium oxide, magnesium silicate, silicon dioxide and preferably zinc oxide, the presence of which promotes the crosslinking function of the phenolic resin, however, with rubbers which do not readily cure with phenolic resins, the conjoint use of a halogen donor and zinc oxide is recommended. The preparation of halogenated phenol resins and their use in a curative system with zinc oxide are described in U.S. Patent Nos. 2,972,600 and 3,093,613. Examples of suitable halogen donors are stannous chloride, ferric chloride, or halogen donating polymers such as chlorinated paraffin, chlorinated polyethylene, chlorosulfonated polyethylene, and polychlorobutadiene (neoprene rubber). The term "activator" as used herein means any material which materially increases the cross-linking efficiency of the phenolic curing resin and includes metal oxides and halogen donors either used alone or conjointly. For further details of phenolic curative systems see "Vulcanization and Vulcanizing Agents," W. Hoffman, Palmerton Publishing Company. Suitable phenolic curing resins and brominated phenolic curing resins are commercially available, for example, such resins may be purchased under the trade names SP-1045, SP-1055 and SP-1056 from Schenectady Chemicals, Inc. Similar functionally equivalent phenolic curing resins may be obtained from other sources. As explained above, sufficient quantities of curatives are used to achieve essentially complete cure of the rubber.

For halogenated butyl rubbers, a preferred cure system is based on ZnO and/or MgO. In this system the MgO does not act as an activator but as an acid acceptor that stabilizes the rubber against dehydrohalogenation.

Another preferred cure system for halogenated butyl rubbers comprises ZnO and a maleimide product. Among the maleimide products, bismaleimides are especially effective. A preferred bismaleimide is represented by m-phenylene bismaleimide (4,4'-m-phenylene bismaleimide) (HVA-2). Additional examples of the bismaleimide are 4,4'-vinylenediphenyl bismaleimide, p-phenylene bismaleimide, 4,4'-sulfonyldiphenyl bismaleimide, 2,2'-dithiodiphenyl bismaleimide, 4,4'-ethylene-bis-oxophenyl bismaleimide, 3,3'-dichloro-4,4'-biphenyl bismaleimide, o-phenylene bismaleimide, hexamethylene bismaleimide and 3,6-durine bismaleimides. Usually about 0.5 to about 15 weight parts, preferably from about 1 or 2 to about 10 weight parts of the curative or curative system are used per 100 weight parts of the rubber to be cured. The final amount of curative/curative system is determined by the employed curative/curative system itself and the desired level of cure.

Polyalkylene Glycol

The polyalkylene glycol used according to the present invention comprises structural units derived from ethylene oxide (EO) or propylene oxide (PO) or both. Typical polyalkylene glycols suitable according to the present invention are polyethylene glycol, polypropylene glycol and mixtures thereof. In mixed EO/PO poly(ethylene oxide/propylene oxide) glycols there is no limitation for the ratio of EO/PO. The end groups can be selected from hydroxyl, alkyl, preferably $C_1$ to $C_{12}$ alkyl or any other group such as amine, vinyl ($CH_2$=CH-) or any combination of these groups. Preferably the polyalkylene glycol has an average molecular weight ($M_w$) between about 200 to about 40,000, preferably between about 400 to about 30,000 and most preferably between about 600 to about 20,000.

The average molecular weight is determined by measurement of the OH-value according to DIN 53240-2, the disclosure of which is fully incorporated herein by reference, and subsequent calculation by the following equation:

$$\frac{OH - endgroups \cdot 56100}{OH - value} = M_w [g / mol]$$

wherein the number of OH-endgroups is 1 or 2.

Alternatively, the molecular weight is measured by Gel Permeation Chromatographie (GPC).

Suitable polyalkylene glycols are commercially available under the trade designations Ucon® Lubricant LB 1715, Pluritol® A 2000 PE, Pluritol® A 2000 P, Pluritronic® RPE 3110, Lutensol® TO 20, Plurafac® LF 1430 Pluriol® P4000, Polyglycol® DME 500.

Processing of the thermoplastic elastomer compositions according to the present invention may be performed by any common extrusion method that is known form the prior art. For instance, suitable processing methods are selected from extrusion, injection-molding, bbw-molding, compression-molding, slush-molding and thermo-forming and calendering.

The use of the thermoplastic elastomer compositions according to the present invention leads to shaped extruded articles having the desired part aspects and surface appearance. This improvement in the properties of the final products is due to the improved processability of the composition.

Examples of shaped articles are represented by profiles, molded parts, sheets, films and calendered parts.

The following examples are intended to illustrate the invention but are not intended to be limiting. Unless otherwise indicated in the examples and throughout the description percentages are by weight unless otherwise indicated.

While in accordance with the patent statutes the best mode and preferred embodiment have been set forth the scope of the invention is not limited thereto, but rather by the scope of the attached claims.

Examples

The thermoplastic elastomer compositions obtained from examples 1 to 21 and comparative examples 1 and 2 were formed into profiles and subjected to physical testing which is reported in the subsequent Tables.

As is evident from the examples the addition of the polyalkylene glycol leads to an significantly improved appearance of the extrudate surfaces aspect like smoothness (as represented by a low Ra-value), free of Rococo defect, extruded profile edge aspect, higher gloss and to an increase of their mechanical properties such as elongation at break and in some cases to an increase of tensile strength at break.

The compression set was measured according to ISO 815 B without using any lubricant on a button having 13 mm diameter and 6 mm thickness. The button has been cut out from an injection molded plaque with 100 mm length, 100 mm width and 6 mm thickness. The % of compression of the test samples was 25% in all cases. The measurement conditions are mentioned in the Tables that follow.

| Table 1 | | | | | |
|---|---|---|---|---|---|
| | **Comp. 1** | **Ex. 1** | **Ex. 2** | **Ex. 3** | **Ex. 4** |
| **Thermoplastic Elastomer Composition** | | | | | |
| **Ingredient** | **[wt.-%]** | **[wt.-%]** | **[wt.-%]** | **[wt.-%]** | **[wt.-%]** |
| Vistalon® 3666[1] | 50.7 | 50.7 | 50.7 | 50.7 | 50.7 |
| HA 507MO PP[2] | 8.78 | 8.78 | 8.78 | 8.78 | 8.78 |
| HF 136 MO PP[3] | 1.74 | 1.74 | 1.74 | 1.74 | 1.74 |
| Polestar® 200[4] | 12.9 | 11.4 | 9.9 | 11.4 | 9.9 |
| PP 4045[5] | 7.0 | 7.0 | 7.0 | 7.0 | 7.0 |
| Sunpar® 150 6] | 16.64 | 16.64 | 16.64 | 16.64 | 16.64 |
| ZnO | 0.58 | 0.58 | 0.58 | 0.58 | 0.58 |
| $SnCl_2$ | 0.36 | 0.36 | 0.36 | 0.36 | 0.36 |
| Struktol® XP 1401 PEG A[7] | - | 1.5 | 3.0 | - | - |
| Struktol® XP 1402 PEG B[8] | - | - | - | 1.5 | 3.0 |
| SP 1045[9] | 1.3 | 1.3 | 1.3 | 1.3 | 1.3 |
| Hardness Shore A (ISO 868-85; 15 sec.) | 65 | 65 | 68 | 69 | 68 |
| **Gloss (ISO2813)** | | | | | |
| at 20° | 0.1 | 1.1 | 1.5 | 1.0 | 1.2 |
| at 60° | 1.9 | 15.8 | 22.4 | 15.1 | 16.3 |
| at 85° | 30 | 58.8 | 76.6 | 60.6 | 56.2 |

[1] Vistalon® 3666 is an EPDM rubber supplied by ExxonMobil.
[2] HA 507 PP is a polypropylene homopolymer having a MFI of 0.8 (ASTM 1238-98; 230°C/2.16 kg), supplied by Borealis.
[3] HF 136 MO PP is a polypropylene homopolymer having a MFI of 20, supplied by Borealis.
[4] Polestar® 200 is a calcinated clay supplied by ECCI (English China Clay International).
[5] PP 4045 is a carbon black masterbatch containing 40 wt.-% carbon black and 60 wt.-% polypropylene.
[6] Sunpar® 150 is a paraffinic oil supplied by Sunoco.
[7] Struktol® XP 1401 PEG A is a polyalkylene glycol having an average molecular weight of 1,500 supplied by Schill-Sellacher.
[8] Struktol® XP 1402 PEG B [8] is a polyalkylene glycol having an average molecular weight of 4,000 supplied by Schill-Seilacher.
[9] SP 1045 phenolic resin curing agent supplied by Schenectady.
[10] UCON Lubricant LB-1715 is a polypropylene glycol supplied by DOW which is not soluble in water.
[11] Pluriol® A 2000 PE is an alkyl ethylene propylene glycol supplied by BASCOM.
[12] Pluriol® A 2000 P is an alkyl propylene glycol supplied by BASCOM.

| Table 2 | | | | | | | |
|---|---|---|---|---|---|---|---|
| | **Comp. 2** | **Ex. 5** | **Ex. 6** | **Ex. 7** | **Ex. 8** | **Ex. 9** | **Ex. 10** |
| **Thermoplastic Elastomer Composition** | | | | | | | |
| **Ingredient** | [wt.-%] | [wt.-%] | [wt.-%] | [wt.-%] | [wt.-%] | [wt.-%] | [wt.-%] |
| Vistalon® 3666[1] | 50.7 | 50.7 | 50.7 | 50.7 | 50.7 | 50.7 | 50.7 |
| HA 507P pp[2] | 8.78 | 8.78 | 8.78 | 8.78 | 8.78 | 8.78 | 8.78 |
| HF 136 MO pp[3] | 1.74 | 1.74 | 1.74 | 1.74 | 1.74 | 1.74 | 1.74 |
| Polestar® 200[4] | 12.9 | 12.6 | 12.4 | 9.6 | 11.9 | 11.9 | 12.6 |
| PP 4045[5] | 7.0 | 7.0 | 7.0 | 7.0 | 7.0 | 7.0 | 7.0 |
| Sunpar® 150[6] | 16.64 | 16.64 | 16.64 | 16.64 | 16.64 | 16.64 | 16.64 |
| ZnO | 0.58 | 0.58 | 0.58 | 0.58 | 0.58 | 0.58 | 0.58 |
| $SnCl_2$ | 0.36 | 0.36 | 0.36 | 0.36 | 0.36 | 0.36 | 0.36 |

(continued)

| Table 2 | | | | | | | |
|---|---|---|---|---|---|---|---|
| | **Comp. 2** | **Ex. 5** | **Ex. 6** | **Ex. 7** | **Ex. 8** | **Ex. 9** | **Ex. 10** |
| **Thermoplastic Elastomer Composition** | | | | | | | |
| UCON Lubricant LB-1715[10] | - | - | - | - | 0.5 | 1 | - |
| Pluriol A 2000 PE[11] | - | - | - | - | - | - | 0.3 |
| Pluriol A 2000 P[12] | - | 0.3 | 0.5 | 2 | 0 | 0 | 0 |
| SP 104[9] | 1.3 | 1.3 | 1.3 | 2.6 | 1.3 | 1.3 | 1.3 |
| Hardness Shore A (ISO 868-85; 15s) | 71 | 70 | 71 | 67 | 69 | 73 | 69 |
| **Tensile Strength (ISO 868-85, ISO 37, ISO 34) measured perpendicular to flow direction** | | | | | | | |
| Mod 100 [MPa] | 2.7 | 2.5 | 2.6 | 2.2 | 2.4 | 2.6 | 2.5 |
| Mod 300 [MPa] | 5.6 | 4.6 | 4.8 | 4.4 | 4.6 | 4.5 | 4.5 |
| Elongation [%] | 366 | 484 | 467 | 455 | 481 | 513 | 514 |
| Tensile Strength [MPa] | 6.9 | 7.1 | 7.3 | 7.0 | 7.3 | 7.6 | 7.1 |
| Tear strength [kN/m] | 22 | 25 | 25 | 23 | 23 | 27 | 26 |
| **Compression Set (ISO 815 B)** | | | | | | | |
| Mean [%] @ RT (20 °C), 24h | 17 | 16 | 19.1 | 16 | 21 | 18 | 17 |
| Mean [%] @ 70°C, 24h | 29 | 33 | 32 | 30 | 33 | 36 | 36 |
| Mean [%] @ 100°C, 24h | 35 | 40 | 42 | 41 | 38 | 40 | 38 |
| **Surface Roughness (ISO 4288)[13]** | | | | | | | |
| Roughness (Ra) [μm] | 2.24 | 0.75 | 0.90 | 0.67 | 1.38 | 0.67 | 0.90 |
| Rococo Effect (visual assessment) | Y | Some | N | N | N | N | N |
| Glossy Surface (visual assessment) | N | N | N | N | N | N | N |
| Edge (visual assessment) | R | S | S | S | S | S | S |
| Y: Yes; N: No; S: smooth; R: rough | | | | | | | |
| [13] extruded strip of 2 x 47 mm (thickness x width) | | | | | | | |

| Table 3 | | | | | | |
|---|---|---|---|---|---|---|
| | **Comp. 2** | **Ex.11** | **Ex. 12** | **Ex. 13** | **Ex. 14** | **Ex. 15** |
| **Thermoplastic Elastomer Composition** | | | | | | |
| **Ingredient** | [wt.-%] | [wt.-%] | [wt.-%] | [wt.-%] | [wt.-%] | [wt.-%] |
| Vistalon® 3666[1] | 50.7 | 50.7 | 50.7 | 50.7 | 50.7 | 50.7 |
| HA 507P PP[2] | 8.78 | 8.78 | 8.78 | 8.78 | 8.78 | 8.78 |

(continued)

| Table 3 | | | | | | |
|---|---|---|---|---|---|---|
| | **Comp. 2** | **Ex.11** | **Ex. 12** | **Ex. 13** | **Ex. 14** | **Ex. 15** |
| **Thermoplastic Elastomer Composition** | | | | | | |
| HF 136 MO PP[3] | 1.74 | 1.74 | 1.74 | 1.74 | 1.74 | 1.74 |
| Polestar® 200[4] | 12.9 | 12.4 | 12.4 | 11.9 | 11.9 | 12.4 |
| PP 4045[5] | 7.0 | 7.0 | 7.0 | 7:0 | 7.0 | 7.0 |
| Sunpar® 150[6] | 16.64 | 16.64 | 16.64 | 16.64 | 16.64 | 16.64 |
| ZnO | 0.58 | 0.58 | 0.58 | 0.58 | 0.58 | 0.58 |
| $SnCl_2$ | 0.36 | 0.36 | 0.36 | 0.36 | 0.36 | 0.36 |
| Pluriol® A 2000 PE[11] | - | - | 0.5 | 1 | - | 0.3 |
| Pluronic® RPE 3110 p[14] | - | - | - | - | 1 | - |
| Lutensol® TO 20[15] | - | - | - | - | - | 0.5 |
| Plurafac® LF1430[16] | - | 0.5 | - | - | - | - |
| SP 1045[9] | 1.3 | 1.3 | 1.3 | 2.6 | 1.3 | 1.3 |
| Hardness Shore A (ISO 868-85; 15s) | 71 | 69 | 70 | 69 | 71 | 60 |
| **Tensile Strength (ISO 868-85, ISO 37, ISO 34) measured perpendicular to flow direction** | | | | | | |
| Mod 100 [MPa] | 2.7 | 2.4 | 2.4 | 2.2 | 2.3 | 2.3 |
| Mod 300 [MPa] | 5.6 | 4.2 | 4.4 | 3.8 | 4.1 | 4.3 |
| Elongation [%] | 366 | 484 | 467 | 455 | 513 | 514 |
| Tensile Strength [MPa] | 6.9 | 6.3 | 6.7 | 5.7 | 6.1 | 6.8 |
| Tear strength [kN/m] | 22 | 25 | 26 | 25 | 25 | 25 |
| **Compression Set (ISO 815 B)** | | | | | | |
| Mean [%]@ RT, 24h | 17 | 23 | 23.5 | 26 | 24 | 23 |
| Mean [%] @ 70°C, 24h | 29 | 37 | 37 | 41 | 38 | 37 |
| Mean [%] @ 100°C, 24h | 35 | 48 | 49 | 52 | 47 | 45 |
| **Surface Roughness (ISO 4288)[13]** | | | | | | |
| Roughness (Ra) [μm] | 2.24 | 0.83 | 0.63 | 0.67 | 0.47 | 0.87 |
| Glossy Surface (visual assessment) | N | N | N | Y | Y | N |
| Edge (visual assessment) | R | S | S | S | S | R |
| Rococo Effect (visual assessment) | Y | N | N | N | N | N |

(continued)

| Surface Roughness (ISO 4288)[13] |
|---|
| Y: Yes, N: No, S: smooth, R: rough |
| [14] Pluronic RPE 3110 P is an ethylene-propylene copolymer glycol supplied by BASCOM having a high content of propylene oxide.<br>[15] Lutensol® TO 20 is an $C_{13}H_{27}$-terminated polyalkylene glycol supplied by BASCOM.<br>[16] Plurafac® LF1430 is an alkoxylated ethylene-propylene glycol supplied by BASCOM. |

| Table 4 | | | | | | | |
|---|---|---|---|---|---|---|---|
| | **Comp. 2** | **Ex. 16** | **Ex. 17** | **Ex. 18** | **Ex. 19** | **Ex. 20** | **Ex. 21** |
| **Thermoplastic Elastomer Composition** | | | | | | | |
| **Ingredient** | [wt.-%] | [wt.-%] | [wt.-%] | [wt.-%] | [wt.-%] | [wt.-%] | [wt.-%] |
| Vistalon® 3666[1] | 50.7 | 50.7 | 50.7 | 50.7 | 50.7. | 50.7 | 50.7 |
| HA 507P pp[2] | 8.78 | 8.78 | 8.78 | 8.78 | 8.78 | 8.78 | 8.78 |
| HF 136 MO pp[3] | 1.74 | 1.74 | 1.74 | 1.74 | 1.74 | 1.74 | 1.74 |
| Polestar® 200[4] | 12.9 | 11.9 | 10.6 | 12.9 | 12.4 | 11.9 | 12.4 |
| PP 4045[5] | 7.0 | 7.0 | 7.0 | 7.0 | 7.0 | 7.0 | 7.0 |
| Sunpar® 150[6] | 16.64 | 16.64 | 16.64 | 16.64 | 16.64 | 16.64 | 16.64 |
| ZnO | 0.58 | 0.58 | 0.58 | 0.58 | 0.58 | 0.58 | 0.58 |
| $SnCl_2$ | 0.36 | 0.36 | 0.36 | 0.36 | 0.36 | 0.36 | 0.36 |
| Pluriol® A 2000 PE[11] | - | - | 0.5 | - | - | - | - |
| Pluronic® RPE 3110 p[14] | - | - | - | - | - | - | - |
| Lutensol® TO 20[15] | - | 1 | 1 | - | - | - | - |
| Plurafac® LF1430[16] | - | - | - | - | - | - | - |
| Pluriol® P4000[17] | | | | 0.5 | 1 | 2 | - |
| Polyglycol® DME500[18] | | | | 0 | 0 | 0 | 0.5 |
| SP 1045[9] | 1.3 | 1.3 | 2.6 | 1.3 | 1.3 | 1.3 | 1.3 |
| Hardness Shore A (ISO 868-85; 15s) | 71 | 69 | 68 | 72 | 64 | 68 | 68 |
| **Tensile Strength (ISO 868-85, ISO 37, ISO 34) measured perpendicular to flow** direction | | | | | | | |
| Mod 100 [MPa] | 2.7 | 2.2 | 2.3 | 2.5 | 2.0 | 2.0 | 2.4 |
| Mod 300 [MPa] | 5.6 | 3.9 | 4.4 | 4.7 | 4.1 | 3.5 | 4.3 |
| Elongation [%] | 366 | 506 | 494 | 434 | 470 | 523 | 499 |
| Tensile Strength [MPa] | 6.9 | 6.1 | 7.4 | 6.5 | 6.0 | 5.8 | 6.6 |
| Tear Strength [kN/m] | 22 | 25 | 24 | 24 | 23 | 24 | 24 |
| **Compression Set (ISO 815 B)** | | | | | | | |
| Mean [%] @ RT, 24h | 17 | 24 | 17 | 20 | 22 | 23 | 19 |
| Mean [%] @ 70°C, 24h | 29 | 38 | 33 | 32 | 35 | 37 | 35 |

(continued)

| | | | | | | | |
|---|---|---|---|---|---|---|---|
| **Compression Set (ISO 815 B)** | | | | | | | |
| Mean [%] @ 100°C, 24h | 35 | 48 | 46 | 45 | 44 | 48 | 46 |
| **Surface Roughness (ISO 4288)[13]** | | | | | | | |
| Roughness (Ra) [μm] | 2.24 | 1.18 | 0.87 | 1.26 | 0.83 | 0.39 | 0.75 |
| Glossy Surface (visual assessment) | N | Y | N | N | N | Y | N |
| Edge (visual assessment) | R | S | S | R | R | S | S |
| Rococo Effect (visual assessment) | Y | N | N | N | N | N | Some |
| Y: Yes, N: No, S: smooth, R: rough | | | | | | | |
| [17] Pluriol® P4000 is a polypropylene glycol supplied by BASCOM. [18] Polyglycol® DME500 is a polyalkylene glycol with two methyl end groups supplied by Clariant. | | | | | | | |

## Claims

**1.** A thermoplastic elastomer composition comprising

- an at least partially cured rubber;
- a thermoplastic resin selected from polypropylene homopolymers, polypropylene-ethylene random copolymers and mixtures thereof;
- a polyalkylene glycol having an average molecular weight as determined by OH-value measurement from 600 to 20,000.

**2.** The composition of claim 1 wherein the polyalkylene glycol comprises structural repeating units derived from ethylene oxide, propylene oxide or ethylene oxide and propylene oxide.

**3.** The composition of any one of claims 1 to 2 comprising from 0.05 wt.-% to 10 wt.-% of the polyalkylene glycol, based upon the total amount of thermoplastic elastomer composition.

**4.** The composition of any one of claims 1 to 3, wherein the at least partially cured rubber is an ethylene/propylene/non-conjugated diene rubber (EPDM).

**5.** The composition of any one of claims 1 to 4, wherein the thermoplastic resin is selected from the group consisting of homopolymers of olefinic $C_2$ to $C_7$ monomers, copolymers of olefinic $C_2$ to $C_7$ monomers, copolymers of olefinic $C_2$ to $C_7$ monomers with (meth)acrylates and mixtures thereof.

**6.** The composition of any one of claims 1 to 5 comprising 10 wt.-% to 90 wt.-% of the at least partially cured rubber, based upon the total weight of the at least partially cured rubber and thermoplastic resin.

**7.** The composition of any one of claims 1 to 6 comprising 90 wt.-% to 10 wt.-%, of the thermoplastic resin, based upon the total weight of the at least partially cured rubber and thermoplastic resin.

**8.** A method of making a thermoplastic elastomer composition comprising the steps of:

- melt-blending

  - a curable rubber;
  - a thermoplastic resin selected from polypropylene homopolymers, polypropylene-ethylene random copolymers and mixtures thereof; and
  - a polyalkylene glycol having an average molecular weight as determined by OH-value measurement from

600 to 20,000;

- adding a curative or a curative system to the melt in an amount sufficient to at least partially cure the rubber, and
- dynamically vulcanizing the blend.

**9.** The method of claim 8, wherein the dynamic vulcanization is performed in the presence of a curative or curing system selected from the group consisting of phenolic curing systems, peroxide curing systems, hydrosilylation curing systems and mixtures thereof.

**10.** The method of claim 8 or 9 wherein the polyalkylene glycol comprises structural repeating units derived from ethylene oxide, propylene oxide or ethylene oxide and propylene oxide.

**11.** The method of any one of claims 8 to 10 comprising from 0.05 wt.-% to 10 wt.-% of polyalkylene glycol, based upon the total amount of thermoplastic elastomer composition.

**12.** The method of any one of claims 8 to 11, wherein the curable rubber is an ethylene/propylene/non-conjugated diene rubber (EPDM).

**13.** The method of any one of claims 8 to 12, wherein the thermoplastic polyolefin is selected from the group consisting of homopolymersof olefinic $C_2$ to $C_7$ monomers, copolymers of olefinic $C_2$ to $C_7$ monomers, copolymers of olefinic $C_2$ to $C_7$ monomers with (meth)acrylates and mixtures thereof.

**14.** The method of any one of claims 8 to 13 comprising 10 wt.-% to 90 wt.-% of the curable rubber, based upon the total weight of curable rubber and thermoplastic resin.

**15.** The method of any one of claims 8 to 14 comprising 90 wt.-% to 10 wt.-% of the thermoplastic resin, based upon the total weight of curable rubber and thermoplastic resin.

**16.** A shaped article of manufacture comprising the thermoplastic elastomer composition of any one of claims 1 to 7.

**17.** The shaped article of claim 16 formed by extrusion, injection molding, compression molding, blow molding, calendering slush molding or thermo-forming.

**18.** The shaped article of claim 17 being selected from profiles, molded parts, sheets, films and calendered parts.

**19.** Use of a polyalkylene glycol as a processability improver for thermoplastic elastomer compositions.

## Patentansprüche

**1.** Thermoplastische Elastomer-Zusammensetzung, umfassend

- einen wenigstens teilweise gehärteten Kautschuk,
- ein thermoplastisches Harz, das aus Polypropylen-Homopolymeren, statistischen Polypropylen-Ethylen-Copolymeren und Mischungen davon ausgewählt ist,
- ein Polyalkylenglycol mit einem Zahlenmittel der Molmasse, bestimmt durch eine Messung der OH-Zahl, von 600 bis 20 000.

**2.** Zusammensetzung nach Anspruch 1, wobei das Polyalkylenglycol von Ethylenoxid, Propylenoxid oder Ethylenoxid und Propylenoxid stammende strukturelle Repetiereinheiten umfasst.

**3.** Zusammensetzung nach einem der Ansprüche 1 bis 2, umfassend von 0,05 Gew.-% bis 10 Gew.-% des Polyalkylenglycols, bezogen auf die Gesamtmenge der thermoplastischen Elastomer-Zusammensetzung.

**4.** Zusammensetzung nach einem der Ansprüche 1 bis 3, wobei der wenigstens teilweise gehärtete Kautschuk ein Ethylen/Propylen/nichtkonjugiertes Dien-Kautschuk (EPDM) ist.

**5.** Zusammensetzung nach einem der Ansprüche 1 bis 4, wobei das thermoplastische Harz ausgewählt ist aus der

Gruppe bestehend aus Homopolymeren von olefinischen $C_2$- bis $C_7$-Monomeren, Copolymeren von olefinischen $C_2$- bis $C_7$-Monomeren, Copolymeren von olefinischen $C_2$- bis $C_7$-Monomeren mit (Meth)Acrylaten und Mischungen davon.

**6.** Zusammensetzung nach einem der Ansprüche 1 bis 5, umfassend 10 Gew.-% bis 90 Gew.-% des wenigstens teilweise gehärteten Kautschuks, bezogen auf das Gesamtgewicht des wenigstens teilweise gehärteten Kautschuks und des thermoplastischen Harzes.

**7.** Zusammensetzung nach einem der Ansprüche 1 bis 6, umfassend 90 Gew.-% bis 10 Gew.-% des thermoplastischen Harzes, bezogen auf das Gesamtgewicht des wenigstens teilweise gehärteten Kautschuks und des thermoplastischen Harzes.

**8.** Verfahren zur Herstellung einer thermoplastischen Elastomer-Zusammensetzung, umfassend die Schritte des:

- Schmelzmischens

  - eines härtbaren Kautschuks,
  - eines thermoplastisches Harzes, das aus Polypropylen-Homopolymeren, statistischen Polypropylen-Ethylen-Copolymeren und Mischungen davon ausgewählt ist,
  - eines Polyalkylenglycols mit einem Zahlenmittel der Molmasse, bestimmt durch eine Messung der OH-Zahl, von 600 bis 20 000,

- Zugebens eines Härtungsmittels oder eines Härtesystems zur Schmelze in einer Menge, die ausreichend ist, um den Kautschuk wenigstens teilweise zu härten, und
- dynamischen Vulkanisierens des Blends.

**9.** Verfahren nach Anspruch 8, wobei die dynamische Vulkanisation in Gegenwart eines Härtungsmittels oder eines Härtesystems durchgeführt wird, das ausgewählt ist aus der Gruppe bestehend aus Phenol-Härtesystemen, Peroxid-Härtesystemen, Hydrosilylierungs-Härtesystemen und Mischungen davon.

**10.** Verfahren nach Anspruch 8 oder 9, wobei das Polyalkylenglycol strukturelle Repetiereinheiten umfasst, die von Ethylenoxid, Propylenoxid oder Ethylenoxid und Propylenoxid stammen.

**11.** Verfahren nach einem der Ansprüche 8 bis 10, umfassend von 0,05 Gew.-% bis 10 Gew.-% Polyalkylenglycol, bezogen auf die Gesamtmenge der thermoplastischen Elastomer-Zusammensetzung.

**12.** Verfahren nach einem der Ansprüche 8 bis 11, wobei der härtbare Kautschuk ein Ethylen/Propylen/nichtkonjugiertes Dien-Kautschuk (EPDM) ist.

**13.** Verfahren nach einem der Ansprüche 8 bis 12, wobei das thermoplastische Polyolefin ausgewählt ist aus der Gruppe bestehend aus Homopolymeren von olefinischen $C_2$- bis $C_7$-Monomeren, Copolymeren von olefinischen $C_2$- bis $C_7$-Monomeren, Copolymeren von olefinischen $C_2$- bis $C_7$-Monomeren mit (Meth)Acrylaten und Mischungen davon.

**14.** Verfahren nach einem der Ansprüche 8 bis 13, umfassend 10 Gew.-% bis 90 Gew.-% des härtbaren Kautschuks, bezogen auf das Gesamtgewicht des härtbaren Kautschuks und des thermoplastischen Harzes.

**15.** Verfahren nach einem der Ansprüche 8 bis 14, umfassend 90 Gew.-% bis 10 Gew.-% des thermoplastischen Harzes, bezogen auf das Gesamtgewicht des härtbaren Kautschuks und des thermoplastischen Harzes.

**16.** Formteil, umfassend die thermoplastische Elastomer-Zusammensetzung nach einem der Ansprüche 1 bis 7.

**17.** Formteil nach Anspruch 16, gebildet durch Extrusion, Spritzgießen, Formpressen, Blasformen, Kalandrier-Slush-Molding oder Warmformen.

**18.** Formteil nach Anspruch 17, ausgewählt aus Profilen, Formstücken, Folien, Filmen und kalandrierten Teilen.

**19.** Verwendung eines Polyalkylenglycols als verarbeitungsverbesserndes Mittel für thermoplastische Elastomer-Zusammensetzungen.

## Revendications

1. Composition d'élastomère thermoplastique comprenant

    - un caoutchouc au moins partiellement durci ;
    - une résine thermoplastique choisie entre des homopolymères de polypropylène, des copolymères statistiques polypropylène-éthylène et leurs mélanges ;
    - un polyalkylèneglycol ayant un poids moléculaire moyen, déterminé par la mesure de l'indice de OH, de 600 à 20 000.

2. Composition suivant la revendication 1, dans laquelle le polyalkylèneglycol comprend des motifs répétés structuraux dérivés de l'oxyde d'éthylène, de l'oxyde de propylène ou bien d'oxyde d'éthylène et d'oxyde de propylène.

3. Composition suivant l'une quelconque des revendications 1 et 2, comprenant 0,05 % en poids à 10 % en poids du polyalkylèneglycol, sur la base de la quantité totale de composition élastomère thermoplastique.

4. Composition suivant l'une quelconque des revendications 1 à 3, dans laquelle le caoutchouc au moins partiellement durci est un caoutchouc éthylène/propylène/diène non conjugué (EPDM).

5. Composition suivant l'une quelconque des revendications 1 à 4, dans laquelle la résine thermoplastique est choisie dans le groupe consistant en des homopolymères de monomères oléfiniques en $C_2$ à $C_7$, des copolymères de monomères oléfiniques en $C_2$ à $C_7$, des copolymères de monomères oléfiniques en $C_2$ à $C_7$ avec des (méth)acrylates et leurs mélanges.

6. Composition suivant l'une quelconque des revendications 1 à 5, comprenant 10 % en poids à 90 % en poids du caoutchouc au moins partiellement durci, sur la base du poids total du caoutchouc au moins partiellement durci et de la résine thermoplastique.

7. Composition suivant l'une quelconque des revendications 1 à 6, comprenant 90 % en poids à 10 % en poids de 1a résine thermoplastique, sur la base du poids total du caoutchouc au moins partiellement durci et de la résine thermoplastique.

8. Procédé pour la préparation d'une composition d'élastomère thermoplastique, comprenant les étapes consistant à :

    - mélanger en masse fondue

        - un caoutchouc durcissable,
        - une résine thermoplastique choisie entre des homopolymères de polypropylène, des copolymères statistiques polypropylène-éthylène et leurs mélanges ; et
        - un polyalkylèneglycol ayant un poids moléculaire moyen, déterminé par la mesure de l'indice de OH, de 600 à 20 000 ;

    - ajouter un durcisseur ou système durcisseur à la masse fondue en une quantité suffisante pour durcir au moins partiellement le caoutchouc, et
    - vulcaniser dynamiquement le mélange.

9. Procédé suivant la revendication 8, dans lequel la vulcanisation dynamique est effectuée en présence d'un durcisseur ou système durcisseur choisi dans le groupe consistant en des systèmes durcisseurs phénoliques, des systèmes durcisseurs à base de peroxyde, des systèmes durcisseurs d'hydrosilylation et leurs mélanges.

10. Procédé suivant la revendication 8 ou 9, dans lequel le polyalkylèneglycol comprend des motifs répétés structuraux dérivés de l'oxyde d'éthylène, de l'oxyde de propylène ou d'oxyde d'éthylène et d'oxyde de propylène.

11. Procédé suivant l'une quelconque des revendications 8 à 10, comprenant 0,05 % en poids à 10 % en poids de polyalkylèneglycol, sur la base de la quantité totale de composition d'élastomère thermoplastique.

12. Procédé suivant l'une quelconque des revendications 8 à 11, dans lequel le caoutchouc durcissable est un caoutchouc éthylène/propylène/diène non conjugué (EPDM).

**13.** Procédé suivant l'une quelconque des revendications 8 à 12, dans lequel la polyoléfine thermoplastique est choisie dans le groupe consistant en des homopolymères de monomères oléfiniques en $C_2$ à $C_7$, des copolymères de monomères oléfiniques en $C_2$ à $C_7$, des copolymères de monomères oléfiniques en $C_2$ à $C_7$ avec des (méth)acrylates et leurs mélanges.

**14.** Procédé suivant l'une quelconque des revendications 8 à 13, comprenant 10 % en poids à 90 % en poids du caoutchouc durcissable, sur la base du poids total de caoutchouc durcissable et de résine thermoplastique.

**15.** Procédé suivant l'une quelconque des revendications 8 à 14, comprenant 90 % en poids à 10 % en poids de la résine thermoplastique, sur la base du poids total de caoutchouc durcissable et de résine thermoplastique.

**16.** Article façonné manufacturé, comprenant la composition d'élastomère thermoplastique de l'une quelconque des revendications 1 à 7.

**17.** Article façonné-manufacturé suivant la revendication 16, formé par extrusion, moulage par injection, moulage par compression ou moulage par soufflage, calandrage, moulage par embouage ou thermoformage.

**18.** Article façonné manufacturé suivant la revendication 17, choisi entre des profilés, des pièces moulées, des feuilles, des films et des pièces calandrées.

**19.** Utilisation d'un polyalkylèneglycol comme agent améliorant l'aptitude au traitement pour des compositions d'élastomères thermoplastiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5552482 A
- WO 9719130 A
- DE 20118862
- US 2001018475 A
- DE 2556472 A
- US 3037954 A, Gessler
- US 4311628 A
- US 4594390 A
- EP 0355021 A
- EP 0776937 A
- US 3287440 A, Giller
- US 3709840 A, Gerstin
- US 2972600 A
- US 3093613 A


### Non-patent literature cited in the description


- Rubber World Blue Book. Materials and Compounding Ingredients for Rubber. 1980, 386-406